(19) Europäisches Patentamt

European Patent Office

Office européen des brevets

(11) **EP 1 650 335 A1**

(12) **EUROPEAN PATENT APPLICATION**
published in accordance with Art. 158(3) EPC

(43) Date of publication:
**26.04.2006 Bulletin 2006/17**

(51) Int Cl.:
*D04B 1/16* (1968.09)    *D04B 21/16* (1968.09)
*D03D 15/00* (1968.09)    *D02G 3/04* (1968.09)
*D02G 3/36* (1968.09)

(21) Application number: **04747953.0**

(22) Date of filing: **20.07.2004**

(86) International application number:
**PCT/JP2004/010590**

(87) International publication number:
**WO 2005/010258 (03.02.2005 Gazette 2005/05)**

(84) Designated Contracting States:
**AT BE BG CH CY CZ DE DK EE ES FI FR GB GR HU IE IT LI LU MC NL PL PT RO SE SI SK TR**

(30) Priority: **29.07.2003 JP 2003281630**

(71) Applicant: **Teijin Fibers Limited
Osaka-shi,
Osaka 541-0054 (JP)**

(72) Inventors:
• **YASUI, Satoshi
c/o Teijin Fibers Limited
Chuo-ku, Osaka-shi
Osaka 5410054 (JP)**

• **MIZOHATA, Seiji
c/o Teijin Fibers Limited
Matsuyama-shi, Ehime 7918041 (JP)**
• **YAMAGUCHI, Takeshi
c/o Teijin Fibers Limited
Matsuyama-shi, Ehime 7918041 (JP)**

(74) Representative: **Hallybone, Huw George et al
Carpmaels and Ransford,
43-45 Bloomsbury Square
London WC1A 2RA (GB)**

(54) **WOVEN OR KNITTED CLOTH CONTAINING TWO DIFFERENT YARNS AND EXHIBITING REDUCTION OF INTERSTITIAL RATE IN BECOMING WET**

(57) A woven or knitted fabric, formed from two types of yarns different in self-elongating property upon absorbing water and capable of increasing the opening area (%) when wetted with water compared with that in dry condition, is constituted so that a ratio A/B of a mean length A of yarns (1) having a high self-elongating upon absorbing water to a mean length B of yarns (2) arranged in the same direction as that of the yarn (1) and having a lower self-elongating upon absorbing water than that of the yarn (1) is adjusted to more than 0.9.

## Fig.1

(A)    (B)

**Description**

TECHNICAL FIELD

The present invention relates to a woven or knitted fabric containing two types of yarns different from each other and capable of decreasing an opening area in the weave or knit structure of the fabric upon wetting with water, and of increasing the opening area in the weave or knit structure of the fabric upon drying.

BACKGROUND ART

A fabric having an opening area percentage, in the fabric structure, capable of reversibly changing between that upon wetting with water and that upon drying is referred to as a moisture-sensitive fabric, and currently various types of moisture-sensitive fabrics have been proposed.

For example, Japanese Unexamined Patent Publication No. 10-77544 (Patent reference 1) discloses a woven or knitted fabric formed from yarns which has been formed from a moisture-absorbing polymer and twisted. In this type of woven or knitted fabric, a twist torque is generated upon absorbing moisture, to cause a flat structure form of the woven or knitted fabric to change into a cubic structure form and, thereby, the opening area of the fabric to increase and the air permeability of the fabric to increase. Also, the inventors of the present invention proposed a woven or knitted fabric formed from self-elongating yarns upon absorbing water and non-self-elongating yarns and capable of increasing an opening area of the fabric upon wetting with water and decreasing the opening area percentage upon drying.

When conventional woven or knitted fabrics constituted from synthetic fibers and/or natural fibers are used for swimming wear and sportswear, a problem such that the resultant wear exhibits a high light permeability upon wetting with, for example, rain and, thus, a high see-through property, occurs. This problem must be solved. Also, a supply of a fabric which exhibit an increased waterproof property when wetted with water and an enhanced air permeability when dried, and has an excellent comfort in wear, is desired.

However, every moisture-sensitive fabric as mentioned above exhibits an increased opening area percentage upon wetting with water and a decreased opening area percentage upon drying, and thus is not desirable for the above-mentioned use. Thus, the woven or knitted fabric of which the opening area percentage changes reversibly, so as to decrease when wetted with water and increase when dried, is desired.

Patent Reference 1: JP-10-77544-A

DISCLOSURE OF THE INVENTION

An object of the present invention is to provide a woven or knitted fabric capable of decreasing an opening area percentage of the fabric upon wetting with water and increasing the opening area percentage of the fabric upon drying, the change in dimensions and form of the fabric, between wetting and drying, being small.

The inventors of the present invention have extensively searched to attain the above-mentioned object, and have found that, in the production of a woven or knitted fabric from two types of yarns different in water-absorbing and self-elongating property, the change in dimensions of the fabric between wet and dry conditions can be made small, and when wetted with water (upon absorbing water or moisture) the opening area percentage of the fabric can be made small and the air permeability of the fabric can be decreased, and when dried, the opening area percentage of the fabric can be made large and the air permeability of the fabric can be increased, by imparting a specific difference in yarn length to the two types of the yarns different from each other. The present invention has been completed on the basis of the finding.

The woven or knitted fabric of the present invention containing two types of yarns different, in self-elongating property upon absorbing water, from each other, is characterized in that when a test piece is prepared from the fabric in such a manner that said woven or knitted fabric is stabilized in dimension in the atmosphere having a temperature at 20°C and a relative humidity at 65% and then cut into pieces of 30 cm long in the warp or wale direction and 30 cm long in the weft or course direction; and yarns (1) having a high water-absorbing and self-elongating property and yarns (2) having a low water-absorbing and self-elongating property and respectively contained in the test pieces satisfy the following requirement:

$$A/B > 0.9$$

wherein A represents a mean length of the yarns (1) having high water-absorbent and self-elongative property and B represents a mean length of said yarns (2) having low water-absorbing and self-elongating property, the yarns (1) and (2) being arranged in the same direction as each other in the test piece and picked up from the test piece; the length of the respective yarn being measured under a load of 1.76 mN/dtex when the yarn is a non-elastic yarn having an elongation at break of 200% or less or under a load of 0.0088 mN/dtex when the yarn is an elastic yarn having an elongation at break higher than 200%, and whereby an opening area percentage of the fabric decreases when wetted with water.

In the woven or knitted fabric of the present invention containing two different types of yarns, when the two types of yarns (1) and (2) different in the water-absorbing, self-elongating property are respectively subjected to a measurement of self-elongation upon absorbing water in such a manner that each of the yarns is wound 10 times around a reel for a hank having a circumference of 1.125m long under a load of 0.88 mN/dtex to form a hank; the hank is removed from the reel and left to stand in the air atmosphere having a temperature at 20°C and a relative humidity at 65% for 24 hours to dry the hank; then the length (Ld, mm) of the dry hank is measured under a load of 1.76 mN/dtex when the yarn is a non-elastic yarn having an elongation at break of 200% or less, or under a load of 0.0088 mN/dtex when the yarn is an elastic yarn having an elongation at break higher than 200%; the hank is immersed in water at a temperature at 20°C for 5 minutes; then the hank is taken out from water; a length (Lw, mm) of the wet hank is measured under the same load as described above in response to the elongation at break of the hank; and the self-elongation of each yarn is calculated in accordance with the following equation:

$$\text{Self-elongation of yarn (\%)} = [(Lw - Ld)/(Ld)] \times 100$$

one (1) of the two type of yarns is preferably a high water-absorbing, self-elongating yarn having a mean self-elongation of +5% or more and the other (2) is preferably a low water-absorbing, self-elongating yarn having a mean self-elongation lower than +5%.

In the woven or knitted fabric of the present invention containing two different types of yarns, the difference ($E_{(1)} - E_{(2)}$) between the self-elongation ($E_{(1)}$) upon absorbing water of the yarn (1) and the self-elongation ($E_{(2)}$) upon absorbing water of the yarn (2) is preferably in a range of from 5 to 35%.

The woven or knitted fabric of the present invention containing two different types of yarns may have a circular knitting structure in which the yarns (1) and (2) are combined in parallel with each other, and the combined yarns form composite yarn loops in the circular knitting structure.

The woven or knitted fabric of the present invention containing two different types of yarns as defined by any one of claims 1 to 3, may have a weave structure in which the yarns (1) and (2) are combined in parallel with each other, and the combined yarns form at least one of a warp and a weft of the woven fabric.

In the woven or knitted fabric of the present invention containing two different types of yarns as defined by any one of claims 1 to 3, preferably, the yarns (1) and the yarns (2) are arranged alternately with every at least one yarn in at least one direction selected from the warp and weft directions of a woven fabric structure or in at least one direction selected from the wale and course directions in a knitted fabric structure.

In the woven or knitted fabric of the present invention containing two different types of yarns, preferably at least one of the yarns (1) is combined with at least one of the yarn (2) to form a composite yarn.

In the woven or knitted fabric of the present invention containing two different types of yarns, fibers from which the yarn (1) having a high water-absorbing and self-elongating property is constituted, are preferably selected from polyetherester fibers formed from polyetherester elastomer comprising hard segments comprising polybutylene terephthalate blocks and soft segments comprising polyoxyethylene glycol blocks.

In the woven or knitted fabric of the present invention containing two different types of yarns, the fibers from which the yarn (2) having a low water-absorbing and self-elongating property is constituted are preferably selected from polyester fibers.

In the woven or knitted fabric of the present invention containing two different types of yarns, when the fabric is subjected to a measurement of change in opening area of the fabric in such a manner that a plurality of test pieces of the woven or knitted fabric are left to stand in the air atmosphere having a temperature at 20°C and a relative humidity at 65% for 24 hours to prepare a plurality of dry test pieces, and separately a plurality of other test pieces of said woven or knitted fabric are immersed in water at a temperature at 20°C for 5 minutes, then taken out from water, and sandwiched between a pair of filter papers under the pressure of 490 N/m$^2$ for one minute to remove water existing in the interstices between fibers in the test pieces to prepare a plurality of wet test pieces, surfaces of each of the dry and wet test pieces are observed by an optical microscope at a magnification of 20 and the opening areas of the dry and wetted test pieces are calculated in accordance with the following equation:

```
Opening area (%) =
    [(total area of openings between yarns)/
    (observed area)] × 100
```

then, a mean value of the measured opening areas of each of the dry and wetted test piece are calculated and a change between the mean opening area of the wetted test pieces and the mean opening area of the dry test pieces was calculated in accordance with the following equation:

```
Change in opening area (%) =
    [(mean opening area of dry test pieces) - (mean
opening area of wetted test pieces)]/(mean opening area
of dry test pieces) × 100,
```

the resultant change in the opening area is preferably at least 10%.

The woven or knitted fabric of the present invention having two different types of yarns is advantageous that, in the change in dimensions and form of the fabric between dry condition and wetted condition, the opening area (%) of the fabric decreases upon absorbing and wetting with water and reversibly increase upon drying. When the woven or knitted fabric is employed for swimwear or sportswear, the opening area (%) of the woven or knitted fabric decreases upon wetting with water, and thus no increase in light permeability and a see-through property occurs upon wetting with water and the waterproof property of the fabric is enhanced.

BRIEF DESCRIPTION OF THE DRAWINGS

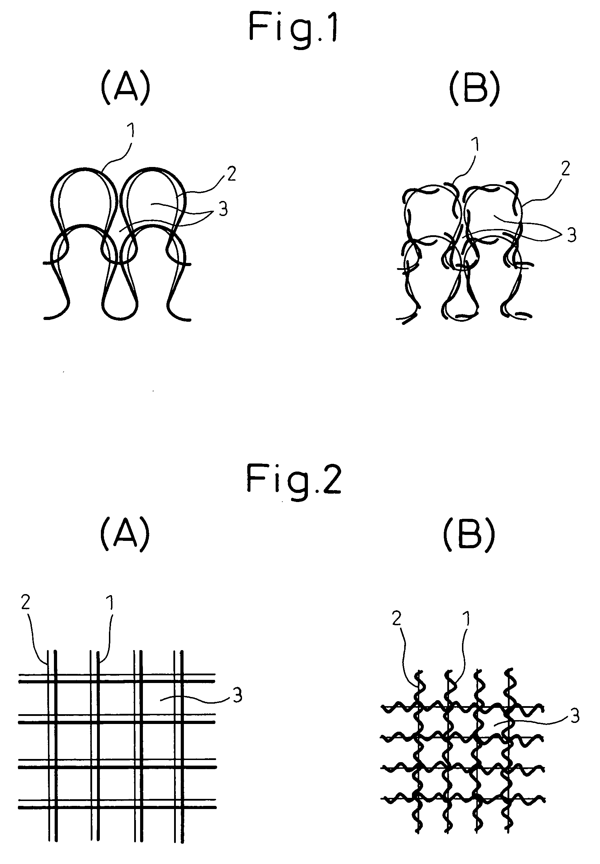

In Fig. 1, Fig. 1-(A) shows an explanatory plane view of a circular knitting structure (loop structure) in dry state, formed from paralleled yarns constituted from two yarns different from each other, as an embodiment of the types of woven or knitted fabric containing two different types of yarns of the present invention, and Fig. 1-(B) shows an explanatory plan view of the circular knitting structure formed from the paralleled yarns as shown in Fig. 1-(A), upon wetting with water;
In Fig. 2, Fig. 2-(A) shows an explanatory plan view of a plain weave structure in dry state, formed from paralleled yarns constituted from two types of yarns different from each other, as another embodiment of the woven or knitted fabric containing two different types of yarns of the present invention, and Fig. 2-(B) shows an explanatory plan view of the plain weave structure formed from the paralleled yarns as shown in Fig. 2-(A) upon wetting with water;

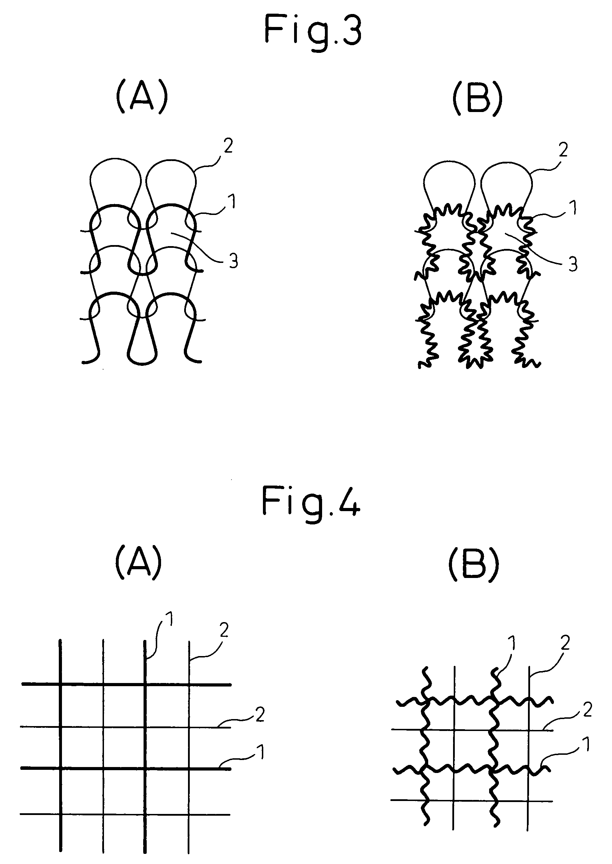

In Fig. 3, Fig. 3-(A) shows an explanatory plan view of a circular knit structure (loop structure), in dry state, of a front surface ply of a two ply circular knitted fabric constituted from the front surface ply having a circular knit structure formed from the two different types of yarns arranged alternately with each other, as another embodiment of the woven or knitted fabric of the present invention having two different types of yarns, and Fig. 3-(B) is an explanatory plan view of the circular knit structure (loop structure), in water-wetted state, of the front surface layer as shown in Fig. 3-(A); and
In Fig. 4, Fig. 4-(A) shows an explanatory plan view of a plain weave structure in dry state, formed from two different types of yarns used as warp and weft yarns, as another embodiment of the woven or knitted fabric containing two different types of yarns of the present invention, and Fig. 4-(B) shows an explanatory plan view of the plain weave structure as shown in Fig. 1-(A) upon wetting with water.

BEST MODE FOR CARRYING OUT THE INVENTION

The woven or knitted fabric of the present invention containing two different types of yarns is a fabric containing two types of yarns different from each other, in a self-elongating property, upon absorbing water.
When the woven or knitted fabric is stabilized in dimension in an air atmosphere having a temperature at 20°C and a relative humidity at 65%, and then cut into test pieces of 30 cm long in the warp or wale direction and 30 cm long in the weft or course direction, the yarns (1) having a high water-absorbing and self-elongating property, and the yarns (2) having a low water-absorbing and self-elongating property contained in the fabric pieces satisfy the following equipment;

$$A/B > 0.9$$

wherein A represents a mean length of the yarns (1) having high water-absorbent and self-elongative property and B represents a mean length of the yarns (2) having low water-absorbing and self-elongating property, the yarns (1) and (2) being arranged in the same direction as each other in the test piece and picked up from the test piece; the length of the respective yarn being measured under a load of 1.76 mN/dtex when the yarn is a non-elastic yarn having an elongation at break of 200% or less or under a load of 0.0088 mN/dtex when the yarn is an elastic yarn having an elongation at break higher than 200%, and whereby the resultant woven or knitted exhibit such a specific performance that when the woven or knitted fabric is wetted with water and absorbs water, the opening area of the fabric decreases and thus the air permeability of the fabric decreases and when the fabric is dried, the opening area of the fabric increases and thus the air permeability of the fabric increases. The number (n) of the test pieces of yarns for the measurement of the mean length of the yarns is preferably 5 to 20.

In the woven or knitted fabric of the present invention, the ratio A/B in the mean length of the yarn (1) having a high water-absorbing and self-elongating property to that of the yarn (2) having a low water-absorbing and self-elongating property must be more than 0.9, as described above, preferably in a range from 1.0 to 2.0, more preferably from 1.0 to 1.5. If the ratio A/B is 0.9 or less, the decrease in the opening area and air-permeability of the woven or knitted fabric by wetting with water becomes insufficient.

The yarns (1) having a high water-absorbing and self-elongating property and usable for the present invention may be formed from either elastic fibers or non-elastic fibers, preferably they exhibit elastic stretchability and shrinkability. The elastic yarn constituted from the elastic fibers preferably has an elongation at break higher than 200%. On the other hand, while there is no limitation in the elongation at break of the yarn formed from the non-elastic fibers, it is preferably 200% or less.

In the woven or knitted fabric of the present invention containing two different types of yarns, the yarns (1) and (2) different in the water-absorbing and self-elongating property from each other preferably satisfy the following condition:

When the two types of yarns (1) and (2) different in the water-absorbing, self-elongating property are respectively subjected to a measurement of self-elongation upon absorbing water in such a manner that each of the yarns is wound 10 times around a reel for a hank having a circumference of 1.125m long under a load of 0.88 mN/dtex to form a hank; the hank is removed from the reel and left to stand in the air atmosphere having a temperature at 20°C and a relative humidity at 65% for 24 hours to dry the hank; then the length (Ld, mm) of the dry hank is measured under a load of 1.76 mN/dtex when the yarn is a non-elastic yarn having an elongation at break of 200% or less, or under a load of 0.0088 mN/dtex when the yarn is an elastic yarn having an elongation at break higher than 200%; the hank is immersed in water at a temperature at 20°C for 5 minutes; then the hank is taken out from water; a length (Lw, mm) of the wet hank is measured under the same load as described above in response to the elongation at break of the hank; and the self-elongation of each yarn is calculated in accordance with the following equation:

$$\text{Self-elongation of yarn(\%)} = [(LW-Ld)/(Ld)] \times 100,$$

preferably one (1) of the two type of yarns is a high water-absorbing, self-elongating yarn having a mean self-elongation of +5% or more and the other (2) is a low water-absorbing, self-elongating yarn having a mean self-elongation lower than +5%. More preferably, the mean self-elongation of the yarn (1) is +6% or more, and the mean self-elongation of the yarn (2) is +4% or less. Still more preferably, the yarns (1) and (2) have a mean self-elongations of +8 to +30% and 0 to +3%, respectively. The number (n) of the test pieces for the above-mentioned measurement is preferably 5 to 20.

The difference ($E_{(1)} - E_{(2)}$) between the self-elongation ($E_{(1)}$) upon absorbing water of the yarn (1) and the self-elongation ($E_{(2)}$) upon absorbing water of the yarn (2) is preferably in a range of from 5 to 35%, more preferably 7 to 30%, still more preferably 10 to 30%. If the self-elongation difference ($E_{(1)} - E_{(2)}$) is less than 5%, the difference in the opening area (%) of the woven or knitted fabric containing two different types of yarns between dry condition and wetted condition may become insufficient and thereby to cause the air-permeability of the fabric in the dry condition to be insufficient. Contrarily, if the difference exceeds 35%, the air-permeability of the fabric may become too low in the wetted state with water and too high in the dry state.

In the woven or knitted fabric of the present invention, a ratio in mass of the yarn (1) having a high water-absorbing and self-elongating property to the yarn (2) having a low water-absorbing and self-elongating property is preferably, in the case of the woven fabric, in a range from 10:90 to 70:30, more preferably from 15:85 to 50:50, while preferably in the case of the knitted fabric, in a range from 10:90 to 60:40, more preferably from 20:80 to 50:50.

In one embodiment of the woven or knitted fabric of the present invention containing two different types of yarns, the fabric has a circular knitting structure
wherein the two types of yarns (1) and (2) are paralleled with each other to form composite yarn loops in the resultant circular knitting structure.

In another embodiment of the woven or knitted fabric of the present invention containing two different types of yarns, the fabric has a weave structure and the two types of yarns (1) and (2) are paralleled with each other and the resultant paralleled yarns constitute at least one of the warp and weft in the weave structure.

In an embodiment of the woven or knitted fabric of the present invention containing two different types of yarns, as shown in Fig. 1 (Figs. 1-(A) and 1-(B)), the fabric has a knitting structure, for example, a circular knitting structure, and the two types of yarns (1) and (2) are employed in the form of paralleled yarn in which the yarns (1) and (2) are paralleled to each other. In Fig. 1, the two types of yarns (1) and (2) are paralleled to each other in a dry state. In the resultant knitted fabric, a plurality of openings 3 are formed by the loops formed from the paralleled yarns. In this case, the ratio A/B in mean length of the yarn (1) to the yarn (2) is more than 0.9. When the knitted fabric is wetted by absorbing water, the yarn (1) having a high water-absorbing and self-elongating property elongates and has a longer yarn length than that of the yarn (2) having a low water-absorbing and self-elongating property, and the elongated yarn (2) is entangled around the yarn (1) to cause the apparent thickness of the paralleled yarn to increase. Thus, the ratio of the total area of openings 3 to whole surface area of the knitted fabric upon wetting with water becomes lower than that upon drying, and the air permeability of the fabric decreases by wetting with water.

In another embodiment of the woven or knitted fabric of the present invention containing two different types of yarns, as shown in Fig. 2 (Fig. 2-(A) and Fig. 2-(B)) the fabric has a woven fabric structure, for example a plain weave structure wherein warp and weft yarns are respectively constituted by paralleled yarns constituted from the yarn (1) 1 having a high water-absorbing and self-elongating property and the yarn (2)2 having a low water-absorbing and self-elongating property. When such paralleled yarns are used as warp and weft yarns to form a woven fabric, and the ratio A/B is controlled to be more than 0.9 openings 3 are formed between the warp and weft yarns.

When the woven fabric is wetted with water to allow the fabric to absorb water, the yarn length of the yarn (1) 1 having a high water-absorbing and self-elongating property becomes longer than that of the yarn (2)2 having a low water-absorbing and self-elongating property. Thus, as shown in Fig. 2-(B), the yarn (2)2 having a longer yarn length crimps around the yarn (1)1 having a shorter yarn length, to cause the resultant paralleled yarn to exhibit an increased apparent thickness. Thus the opening area between the yarns in the resultant wetted woven fabric becomes smaller than that in the dry state.

In the woven or knitted fabric of the present invention containing two different types of yarns, the opening areas (%) of the fabric in the dry and wetted states and the change in the opening area of the fabric between the dry state and the wet state is determined by the following measurement.

A plurality of test pieces of the woven or knitted fabric are left to stand in the air atmosphere having a temperature at 20°C and a relative humidity at 65% for 24 hours to prepare a plurality of dry test pieces, and separately a plurality of other test pieces of said woven or knitted fabric are immersed in water at a temperature at 20°C for 5 minutes, then taken out from water, and sandwiched between a pair of filter papers under the pressure of 490 N/m$^2$ for one minute to remove water existing in the interstices between fibers in the test pieces to prepare a plurality of wet test pieces, surfaces of each of the dry and wet test pieces are observed by an optical microscope at a magnification of 20 and the yarn gap areas of the dry and wetted test pieces are measured in accordance with the following equation:

```
Opening area (%) =
    [(total area of openings between yarns)/
    (observed area)] × 100
```

then, a mean value of the measured opening areas of each of the dry and wetted test piece and a change in mean opening area between the wetted test pieces and the dry test pieces was calculated in accordance with the following equation:

```
Change in opening area (%) =
    [(mean opening area of dry test pieces) -
    (mean opening area of wetted test pieces)]/
    (mean opening area of dry test pieces) × 100.
```

The number n of the test pieces for the above-mentioned measurement is preferably 5 to 20.

The change in opening area of the woven or knitted fabric of the present invention containing the two different types of yarns, between the dry state and the wetted state is preferably at least 10%, more preferably 15 to 20%, still more preferably 8 to 50%. If the change in opening area is less than 10%, there might be a case wherein the opening area of the fabric in the dry state is insufficient.

In the woven or knitted fabric of the present invention containing two different types of yarns, fibers usable for the yarn (1) having a high water-absorbing and self-elongating property are preferably selected from, for example, polyether-ester fibers formed from polyether ester elastomer containing hard segments comprising polybutylene terephthalate blocks and soft segments comprising polyoxyethylene glycol blocks, although not necessarily limited thereto.

Other fibers for the yarn (1) are, for example, polyester fibers consisting of a polyester composition comprising a polyester polymer blended with a polyacrylate metal salt, polyacrylic acid or a copolymer thereof, polymethacrylate or a copolymer thereof, polyvinyl alcohol or a copolymer thereof, polyacrylamide or a copolymer thereof, polyoxyethylene polymer or another, or polyester fibers containing copolymerized 5-sulfoisophthalate. Among them, the polyether ester fibers are preferably used, which are formed from a polyether ester elastomer comprising hard segments formed from polybutylene terephthalate blocks and soft segments formed from polyoxyethylene glycol blocks.

The polybutylene terephthalate used for the hard segments preferably contains butylene terephthalate units of 70 mol% or more. The content of the butylene terephthalate segments is preferably 80 mol% or more, more preferably 90 mol% or more. An acid component for the polymer for constituting the hard segments contains mainly terephthalic acid which may be copolymerized with a small amount of other dicarboxylic acid component, and the glycol component mainly comprises tetramethylene glycol which may be copolymerized with other glycol component.

The dicarboxylic acid component other than terephthalic acid used for forming the polymer for the hard segments is selected from, for example, aromatic or aliphatic dicarboxylic acid components such as naphthalene dicarboxylic acid, isophthalic acid, diphenyl dicarboxylic acid, diphenylxyethane dicarboxylic acid, β-hydroxyethoxy benzoic acid, p-oxybenzoic acid, adipic acid, sebacic acid, 1, 4-cyclohexane dicarboxylic acid. Further, tri-or more-functional polycarboxylic acids such as trimellitic acid or pyromellitic acid may be used as a copolymer component within a range wherein the achievement of the object of the present invention is not disturbed.

The diol component other than tetramethylene glycol used for forming the polymer for the hard segments is selected from, for example, aliphatic, alicyclic or aromatic diol compounds such as trimethylene glycol, ethylene glycol, cyclohexane-1, 4-dimethanol or neopentyl glycol. Also, tri- or more- functional polyol such as glycerin, trimethyrol propane or pentaerythritol may be used as a copolymer component within a range wherein the achievement of the object of the present invention is not disturbed.

Also, polyoxyethylene glycol for forming the soft segments preferably contains oxyethylene glycol units in a content of 70 mol% or more. The content of oxyethylene glycol is more preferably 80 mol% or more, further more preferably 90 mol% or more. Propylene glycol, tetramethylene glycol or glycerin may be copolymerized in addition to the oxyethylene glycol, within a range wherein the achievement of the object of the present invention is not disturbed.

The number-average molecular weight of polyoxyethylene glycol for the soft segment is preferably in a range from 400 to 8,000, more preferably from 1,000 to 6,000.

The above-mentioned polyether-ester elastomer can be produced, for example, by a transesterificaiton reaction of dimethyl phthalate with a material containing tetramethylene glycol and polyoxyethylene glycol in the presence of a transesterificaiton catalyst to prepare bis($\omega$-hydroxybutyl) terephthalate monomer and/or oligomer, and then the monomer and/or oligomer is subjected to a melt-polycondensation reaction in the presence of a polycondensation catalyst and a stabilizer at a high temperature and under a reduced pressure.

A ratio by mass of the hard segments to the soft segments in the polyether-ester elastomer as mentioned above is preferably in a range from 30/70 to 70/30.

When a metal salt of an organic sulfonic acid is copolymerized with polyetherester polymer for the yarn (1), the water-absorbing and self-elongating property of the elastomer is further enhanced.

The polyether-ester fiber for the yarn (1) is produced by melting and extruding the above-mentioned polyetherester in and through a conventional melt-spinning spinneret, then is taken up at a take-up speed in a range from 300 to 1200 m/min (preferably from 400 to 980 m/min) and wound at a draft of 1.0 to 1.2 times (preferably 1.0 to 1.1 times) the take-up speed.

Fibers constituting the yarn (2) having a low water-absorbing and self-elongating property used for the woven or knitted fabric of the present invention containing two different types of yarns, include natural fibers such as cotton or hemp fibers, cellulose chemical fibers such as rayon or cellulose acetate fibers, and synthetic fibers such as polyester fibers, typically polyethylene terephthalate and polytrimethylene terephthalate fiber, polyamide polyacrylonitrile and polypropylene fibers. Among them, conventional (non-elastic) polyester fibers are preferably used.

The fibers, from which the yarns (1) and (2) used for the woven or knitted fabric of the present invention are constituted, optionally contain one or more types of inorganic particles, for example, a delusterant (titanium dioxide), micro-void forming agents (metal salts of organic sulfonic acids), a coloration-preventing agent, a heat stabilizer, a flame retardant (diantimony trioxide), a fluorescent brightener, a coloring pigment, an antistatic agent (metal salts of sulfonic acids), an hygroscopic agent (polyoxyalkylene glycol), an anti-fungus agent and others.

There is no limitation to a type of the fibers from which the yarn (1) and (2) are constituted; that is, the fibers may be either multifilament fibers or staple fibers. However, for the purpose of obtaining a soft touch, the filament fibers are preferably employed.

There is no limitation to the form of the yarn (1) and (2); that is, the yarns may be either spun yarns of staple fibers or multifilament yarns. Also, there is no limitation to a cross-sectional profile of the fibers; that is, the profile may be any of conventional profiles including a circular, triangular, flat, cross-shaped, hexalobal and hollow profiles. Also, there is no limitation to total yarn thickness, individual fiber thickness, and the number of filaments. Usually the total yarn thickness, is preferably in a range from 30 to 300 dtex, the individual fiber thickness is preferably in a range from 0.1 to 50 dtex, more preferably from 0.6 to 3 dtex, and the number of filaments is preferably in a range from 1 to 300, more preferably from 20 to 150 per yarn, in view of the hand and/or the productivity of the fabric.

A ratio by mass of the yarn (1) to the yarn (2) from which the woven or knitted fabric of the present invention is constituted is preferably in a range from 10:90 to 60:40, more preferably from 20:80 to 50:50, for the purpose of effectively decreasing the opening area percentage in a wetted state which purpose is a main object of the present invention.

There is no limitation to the structure of the woven or knitted fabric of the present invention. For example, the weave structure for the woven fabric includes three basic weave structures, that is, plain, twill and satin weave structures modifications thereof for example, a modified twill weave structures, warp or weft two-ply weaves such as warp backed two-ply weave and weft backed two-ply weave structure, and a warp velvet. The knitting structure of the knitted fabric may be either a weft knitting or warp knitting structure or circular knitting structure. The knitting structures preferably include plain, interlock, rib stitch, tuck, half tricot, tricot knitting structures, etc.

The woven or knitting fabric structures for the present invention include multi-ply weave or knitting structures, for example, two ply weave or knitting structure. In the woven or knitting fabric of the present invention, there is no limitation to the yarn arrangement of the yarn (1) and the yarn (2), as long as the requirement to the yarn length ratio, namely A/B > 0.9, is satisfied. The yarns (1) and (2) may be arranged in accordance with the weave or knitting structure as shown below, which structure is other than that shown in Fig. 1 or Fig. 2.

In an embodiment of the woven or knitted fabric of the present invention containing two different types of yarns, consisting of the two types of yarns (1) and (2) alternately arranged with every one yarn in a weave structure at least one of the weft and warp directions or in a knitting structure in at least one direction selected from wale and course directions, respectively. A composite yarn may be formed by combining at least one yarn (1) with at least one yarn (2) selected from the two different types of yarns (1) and (2). A ratio in the number of yarns of the composite yarn or the paralleled yarns of the yarns (1) and (2) to that of the yarn (2) in each yarn direction may be 1:1, or 1:(1 to 5), or 2:1, or 2:(2 to 5), or 3:1, or 3:(2 to 5), or 3:(4 or 5) or 3:(1 to 5).

In the knitting structure shown in Fig. 3, (Fig. 3-(A) and Fig. 3-(B)), only a front surface ply of a knitted fabric having a two ply circular knitting structure in which a front surface ply having a circular knitting structure is formed from the yarns (1) and (2) and a back surface ply having a circular knitting structure is formed from only the yarns (2). In Fig. 3-(A), the yarns (1) and (2) from which the front surface ply is formed extend in the course direction are arranged alternately with every one yarn (1:1) in the wale direction. This fabric having the two ply knitting structure has, upon drying, the circular knitting structure as shown in Fig. 3-(A), and in this dry state, the yarn length ratio A/B of the front surface ply is more than 0.9. When the two ply knitted fabric is wetted with water by absorbing water, no change in dimensions of the back surface ply formed from only the yarns (2) occurs, the yarn (2) in the front surface ply absorbs water and self-elongates to increase the yarn length thereof. In this case, as the whole area of the front surface layer cannot change under a restriction due to back surface ply formed from only the yarn (2), the yarn (1) in the front surface ply is bent in a wave form to cause the area of openings in loops to decrease. Thus, the opening area between the yarns (1) and (2) in the front surface ply decreases and the air-permeability of the fabric decreases, as a whole.

In Fig. 4 (Fig. 4-(A) and Fig. 4-(B)), a plain weave structure is formed from yarns (1) and (2), which are respectively arranged, as warp yarns and weft yarns, alternately with every one yarn (1:1).

The woven fabric which is in dry state exhibits a weave structure as shown in Fig. 4-(A), and the yarn length ratio A/B of the yarns (1) to the yarns (2) is more than 0.9. When the woven fabric is wetted with water by absorbing water, the yarns (2) having a high water-absorbing and self-elongating property self-elongate as shown in Fig. 4-(B), so as to increase the yarn length of the yarns (1), and are bent in wave form, to cause the gaps between the yarns to become small and the opening area of the fabric to decrease.

In the woven or knitted fabric of the present invention containing two different types of yarns, the yarn (1) having a high water-absorbing and self-elongating property and the yarn (2) having a low water-absorbing and self-elongating property may be combined to form a composite yarn such as a combined filament yarn, a composite false twist-textured yarn, a combined and twisted yarn or a covering yarn.

To create the difference in yarn length between the yarns (1) and (2) in the woven fabric as shown in, for example, Fig. 1 and Fig. 2, the following weaving methods (1), (2) and (3) are used.

Weaving method (1) for fabric having a difference in yarn length

The polyetherester fibers having a high stretch modulus of elongation as mentioned hereinbefore are used for the yarns (1), the yarns (1) are paralleled with the yarns (2) having a low water-absorbing and self elongating property and they are then fed to the same yarn feeder at the same feed rate as each other for the weaving or knitting procedure. At that time, for the purpose of controlling the yarn length ratio A/B to a desired value, a some draft may be applied, to an appropriate extent, to the polyetherester fiber yarns (1).

Weaving or knitting method (2) for a fabric having a difference in yarn length

When a woven or knitted fabric containing two different types of yarns is woven or knitted from the yarns (1) and (2), for the yarns (2) having a low water-absorbing and self-elongating property, yarns having the same or a higher shrinkage in boiling water as, or than, that of the yarns (1) having a high water-absorbing and self-elongating property are employed. When the fabric containing these yarns (1) and (2) is subjected to the conventional dyeing process, the yarn (2) more largely shrinks than the yarn (1) and a fabric having a difference in yarn length between the yarns (1) and (2) is obtained.

Weaving or knitting method (3) for a fabric having a difference in yarn length

When the yarns (1) and (2) are combined with to each other to form paralleled yarns, only the yarns (1) are overfed and paralleled to the yarns (1). The resultant paralleled yarns are subjected to an air filament-combining procedure, a twisting procedure or a covering procedure to provide composite yarns. In the resultant composite yarns, there is a difference in yarn length between the yarns (1) and (2); that is, the yarns (1) are longer than the yarns (2). The resultant composite yarns have a different in yarn length. A desired fabric is woven or knitted from the composite yarns and the yarns (2).

The woven or knitted fabric of the present invention is optionally subjected to a dyeing and/or finishing treatment. The dyeing treatment includes both dip-dyeing work and printing work. The finishing treatment may be applied to one or both surfaces of the fabric, and includes various function-imparting treatments such as a water-repellent treatment, a ultraviolet ray-shielding treatment, an anti-fungus treatment, a deodorization treatment, a moth-proofing treatment, a light-storage agent treatment, a retro-reflecting agent treatment, a negative-ion-generator treatment and others.

EXAMPLES

The present invention will be further explained with reference to the following examples which are not intended to limit the scope of the present invention in any way. In the examples, the measurements described below were carried out.

(1) Length of a yarn in a woven or knitted fabric in dry and wet states
Measurement was carried out by the method as described hereinbefore.
(2) Self-elongation of yarn
Measurement was carried out by the method as described hereinbefore.
(3) Shrinkage of yarn in boiling water
Measurement was carried out in accordance with JIS L 1013-1998, 7.15. The number n of test pieces was 3.
(4) Opening areas (%) of woven or knitted fabric in dry and wetted states and the change in the opening area between dry and wetted states.
Measurement was carried out by the method as described hereinbefore.
(5) Air-permeabilities of woven or knitted fabric in dry and wetted states and the change in the air-permeability between dry and wetted states.

Measurement was carried out by the method as described hereinbefore.

Example 1

A polyetherester polymer consisting of 49.8 parts by mass of hard segments formed from polybutylene terephthalate and 50.2 parts by mass of soft segments formed from polyoxyethylene glycol having a number-average molecular weight of 4,000 was melted at 230°C and the resultant melt was extruded through a spinneret for spinning monofilament at an extrusion rate of 3.05 g/min. Of this melt-extruded polymer, streams were taken up through two godet rollers at a speed of 705 m/min and then wound at a speed of 750 m/min (so that a winding draft is 1.06), resulting in an elastic yarn (1) having a high water-absorbing and self-elongating property and a yarn count of 44 dtex/one filament. The self-elongation of this yarn (1) upon absorbing water was 10% in the axial direction of the filament, and the shrinkage thereof in boiling water was 8%.

Also, conventional polyethylene terephthalate multifilament yarns (84 dtex/24 filaments) having a shrinkage of 10% in boiling water and a self-elongation of 1% or less in a wet state was used as a non-self-elongating yarn (2).

The yarns (1) and the yarns (2) were fed in parallel to each other to a 28 gauge single circular knitting machine to produce a circular knitted fabric having a plain knitting structure at densities of 47 courses/2.54 cm and 40 wales/2.54 cm. This circular knitted fabric was subjected to the dyeing and finishing treatments. In the resultant circular knitted fabric, circular knitted composite loops were formed from the yarns (1) and (2) as shown in Fig. 1-(A), and a ratio A/B, in mean yarn length of the resultant knitted fabric, was 1.0. The opening area between the yarns of the resultant circular knitted fabric was 30% in a dry state and 25% in a wet state, the change in opening area was 17%, the air-permeability of the fabric was 210 ml/cm$^2$ in a dry state and 380 ml/cm$^2$ in a wet state. In this circular knitted fabric, it was confirmed that the opening area decreased as the fabric absorbs water and is wetted with water and the opening area and the air-permeability of the fabric increased as the fabric is dried.

Comparative example 1

A knitted fabric having the same knitting structure as in Example 1 was produced from the same yarns (1) and (2) as those used in Example 1 by the same procedures as in Example 1, and the resultant fabric was then subjected to the same dyeing and finishing treatment, as in Example, except that in the paralling procedure, a draft of 50% was applied to the yarns (1) while the yarns (1) were paralleled with the yarns (2) and the resultant paralleled yarns were fed to the circular knitting machine. The resultant circular knitted fabric, had, in dry state, a yarn length ratio A/B of 0.7 and an opening area (%) of 15%, and, in the wetted state with water, an opening area (%) of 23% which was higher than that in the dry state.

UTILIZABILITY IN INDUSTRY

A woven or knitted fabric exhibiting a small change in dimensions and form and having a reversibly changeable opening area between dry state and water-wetted state can be obtained in accordance with the present invention. When such a woven or knitted fabric is used for underwear or sportswear, the opening area of the woven or knitted fabric decreases upon being wetted with water and, thus, when wetted with rain, no increase in light permeability, namely, a see-through property, of the fabric, occurs and the waterproof property of the fabric is enhanced. On the contrary, upon drying the opening area of the woven or knitted fabric increases and the air permeability of the fabric is enhanced.

The woven or knitted fabric having the above-mentioned effects has a very high industrial utilizability.

**Claims**

1. A woven or knitted fabric containing two types of yarns different in self-elongating property upon absorbing water, from each other, wherein when a test piece is prepared from the fabric in such a manner that said woven or knitted fabric is stabilized in dimension in the atmosphere having a temperature at 20°C and a relative humidity at 65% and then cut into pieces of 30 cm long in the warp or wale direction and 30 cm long in the weft or course direction; and yarns (1) having a high water-absorbing and self-elongating property and yarns (2) having a low water-absorbing and self-elongating property and respectively contained in the test pieces satisfy the following requirement:

$$A/B > 0.9$$

wherein A represents a mean length of the yarns (1) having high water-absorbent and self-elongative property and B represents a mean length of said yarns (2) having low water-absorbing and self-elongating property, the yarns (1) and (2) being arranged in the same direction as each other in the test piece and picked up from the test piece; the length of the respective yarn being measured under a load of 1.76 mN/dtex when the yarn is a non-elastic yarn having an elongation at break of 200% or less or under a load of 0.0088 mN/dtex when the yarn is an elastic yarn having an elongation at break higher than 200%, and whereby an opening area percentage of the fabric decreases when wetted with water.

2.  The woven or knitted fabric containing two different types of yarns as defined by claim 1, wherein when the two types of yarns (1) and (2) different in the water-absorbing, self-elongating property are respectively subjected to a measurement of self-elongation upon absorbing water in such a manner that each of the yarns is wound 10 times around a reel for a hank having a circumference of 1.125m long under a load of 0.88 mN/dtex to form a hank; the hank is removed from the reel and left to stand in the air atmosphere having a temperature at 20°C and a relative humidity at 65% for 24 hours to dry the hank; then the length (Ld, mm) of the dry hank is measured under a load of 1.76 mN/dtex when the yarn is a non-elastic yarn having an elongation at break of 200% or less, or under a load of 0.0088 mN/dtex when the yarn is an elastic yarn having an elongation at break higher than 200%; the hank is immersed in water at a temperature at 20°C for 5 minutes; then the hank is taken out from water; a length (Lw, mm) of the wet hank is measured under the same load as described above in response to the elongation at break of the hank; and the self-elongation of each yarn is calculated in accordance with the following equation:

$$Self\text{-}elongation\ of\ yarn\ (\%) = [(Lw-Ld)/(Ld)] \times 100$$

one (1) of the two type of yarns is a high water-absorbing, self-elongating yarn having a mean self-elongation of +5% or more and the other (2) is a low water-absorbing, self-elongating yarn having a mean self-elongation lower than +5%.

3.  The woven or knitted fabric containing two different types of yarns as defined by claim 2, wherein the difference $(E_{(1)} - E_{(2)})$ between the self-elongation $(E_{(1)})$ upon absorbing water of the yarn (1) and the self-elongation $(E_{(2)})$ upon absorbing water of the yarn (2) is in a range of from 5 to 35%.

4.  The woven or knitted fabric containing two different types of yarns as defined by any one of claims 1 to 3, having a circular knitting structure in which the yarns (1) and (2) are combined in parallel with each other, and the combined yarns form composite yarn loops in the circular knitting structure.

5.  The woven or knitted fabric containing two different types of yarns as defined by any one of claims 1 to 3, having a weave structure in which the yarns (1) and (2) are combined in parallel with each other, and the combined yarns form at least one of warp and weft of the woven fabric.

6.  The woven or knitted fabric containing two different types of yarns as defined by any one of claims 1 to 3, wherein the yarns (1) and the yarns (2) are arranged alternately with every at least one yarn in at least one direction selected from the warp and weft directions of a woven fabric structure or in at least one direction selected from the wale and course directions in a knitted fabric structure.

7.  The woven or knitted fabric containing two different types of yarns as defined by any one of claims 1 to 3, wherein at least one of the yarns (1) is combined with at least one of the yarn (2) to form a composite yarn.

8.  The woven or knitted fabric containing two different types of yarns as defined by any one of claims 1 to 3, wherein fibers from which the yarn (1) having a high water-absorbing and self-elongating property is constituted, are selected from polyetherester fibers formed from polyetherester elastomer comprising hard segments comprising polybutylene terephthalate blocks and soft segments comprising polyoxyethylene glycol blocks.

9.  A woven or knitted fabric containing two different types of yarns as defined by any one of claims 1 to 3, wherein fibers from which the yarn (2) having a low water-absorbing and self-elongating property is constituted, are selected from polyester fibers.

10. A woven or knitted fabric containing two different types of yarns as defined by any one of claims 1 to 3, wherein when the fabric is subjected to a measurement of change in opening area of the fabric in such a manner that a plurality of test pieces of the woven or knitted fabric are left to stand in the air atmosphere having a temperature at 20°C and a relative humidity at 65% for 24 hours to prepare a plurality of dry test pieces, and separately a plurality of other test pieces of said woven or knitted fabric are immersed in water at a temperature at 20°C for 5 minutes, then taken out from water, and sandwiched between a pair of filter papers under the pressure of 490 N/m$^2$ for one minute to remove water existing in the interstices between fibers in the test pieces to prepare a plurality of wet test pieces, surfaces of each of the dry and wet test pieces are observed by an optical microscope at a magnification of 20 and the opening areas of the dry and wetted test pieces are calculated in accordance with the following equation:

```
Opening area (%) =
        [(total area of openings between yarns)/
        (observed area)] × 100
```

then, a mean value of the measured opening areas of each of the dry and wetted test piece are calculated and a change between the mean opening area of the wetted test pieces and the mean opening area of the dry test pieces was calculated in accordance with the following equation:

```
Change in opening area (%) =
        [(mean opening area of dry test pieces) - (mean
opening area of wetted test pieces)]/(mean opening area
of dry test pieces) × 100, and
```

the resultant change in the yarn gap area is at least 10%.

# Fig.1

(A)

(B)

# Fig.2

(A)

(B)

# Fig.3

(A)

(B)

# Fig.4

(A)

(B)

<table>
<tr><td colspan="2" align="center">**INTERNATIONAL SEARCH REPORT**</td><td>International application No.<br>PCT/JP2004/010590</td></tr>
</table>

**A. CLASSIFICATION OF SUBJECT MATTER**
Int.Cl⁷ D04B1/16, D04B21/16, D03D15/00, D02G3/04, D02G3/36

According to International Patent Classification (IPC) or to both national classification and IPC

**B. FIELDS SEARCHED**

Minimum documentation searched (classification system followed by classification symbols)
Int.Cl⁷ D04B1/00-1/28, D04B21/00-21/20, D03D1/00-27/18, D02G1/00-3/48

Documentation searched other than minimum documentation to the extent that such documents are included in the fields searched
Jitsuyo Shinan Koho           1926-1996    Toroku Jitsuyo Shinan Koho    1994-2004
Kokai Jitsuyo Shinan Koho     1971-2004    Jitsuyo Shinan Toroku Koho    1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-82555 A (Teijin Ltd.),<br>19 March, 2003 (19.03.03),<br>Claim 1; Par. Nos. [0009] to [0011], [0025],<br>[0033]; examples 1, 2<br>(Family: none) | 1-10 |
| A | JP 6-200438 A (Unitika Ltd.),<br>19 July, 1994 (19.07.94),<br>Claim 1; Par. Nos. [0009], [0016]<br>(Family: none) | 1-10 |
| A | JP 5-311567 A (Unitika Ltd.),<br>22 November, 1993 (22.11.93),<br>Claim 1; Par. Nos. [0008], [0009], [0015]<br>(Family: none) | 1-10 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 October, 2004 (21.10.04) | Date of mailing of the international search report<br>16 November, 2004 (16.11.04) |
|---|---|
| Name and mailing address of the ISA/<br>Japanese Patent Office | Authorized officer |
| Facsimile No. | Telephone No. |

Form PCT/ISA/210 (second sheet) (January 2004)

15

| | INTERNATIONAL SEARCH REPORT | International application No. |
|---|---|---|
| | | PCT/JP2004/010590 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2003-293234 A  (Teijin Ltd.),<br>15 October, 2003 (15.10.03),<br>Claim 1; Par. No. [0011]; examples 1, 3<br>& WO 03/083194 A1 | 1-10 |
| A | JP 8-325874 A  (Unitika Ltd.),<br>10 December, 1996 (10.12.96),<br>Claim 1; Par. No. [0016]<br>(Family: none) | 1-10 |

Form PCT/ISA/210 (continuation of second sheet) (January 2004)